# EUROPEAN PATENT SPECIFICATION

(11) **EP 3 720 806 B1**
(45) Date of publication and mention of the grant of the patent: **25.10.2023**
(21) Application number: 18885566.2
(22) Date of filing: 29.08.2018
(51) Int. Cl.: B67D 7/04, B67D 7/62, F04B 3/00, F04D 15/00, F04B 17/03, F04B 49/06, F04B 49/02, F04C 13/00, F04C 14/06, F04D 15/02, F04C 5/00

(54) **DRUM MOUNTED, ON-DEMAND FLUID TRANSFER PUMP**
TROMMELMONTIERTE ON-DEMAND-FLUIDTRANSFERPUMPE
POMPE DE TRANSFERT DE FLUIDE À LA DEMANDE MONTÉE SUR TAMBOUR

(30) Priority: 04.12.2017 AU 2017904870
(43) Date of publication of application: 14.10.2020
(73) Proprietor: MACNAUGHT PTY LIMITED, Turrella NSW 2205 (AU)
(72) Inventor: MULYADI, Welly, Turrella, New South Wales 2205 (AU); UCCELLANI, Marco, Turrella, New South Wales 2205 (AU); SZCZUROWSKI, Pawel, Turrella, New South Wales 2205 (AU); JOSEPHSON, Greg, Turrella, New South Wales 2205 (AU)
(74) Representative: Botti & Ferrari S.p.A.
(86) International application number: PCT/AU2018/050922
(87) International publication number: WO 2019/109128

(56) References cited:
- WO-A2-2010/045186
- DE-A1- 3 724 386
- US-A- 3 447 109
- US-A- 5 529 460
- US-A- 5 769 134
- US-A- 5 769 134
- US-A- 6 053 361
- US-A1- 2006 245 941
- US-A1- 2013 284 308

## Description

### Field

The present invention relates to a drum mounted, on-demand fluid transfer pump.

### Background

Industrial fluids, such as engine or gearbox oils, are typically transferred from bulk fluid containers, such as drums, to dispensing points, such as car engines or gearboxes, using hoses, hand-actuated pumps and trigger-operated dispensing guns.

Conventional arrangements for transferring industrial fluids from drums have several drawbacks. It is difficult to coordinate the use of the hand-actuated pumps and trigger-operated dispensing guns resulting in spillage and overfilling. In addition, the hoses between the drums and the hand-actuated pumps are untidy and prone to leaking. US 5529460 A discloses a pressure washer provided with a flow control switch and a bypass passage wherein the flow control switch shuts the motor of the pressure washer off when fluid is not being supplied to the pressure washer or when the spray gun of the pressure washer is closed and wherein the bypass passage relieves excess outlet pressure and activates the flow control switch when the spray gun is closed.

In this context, there is a need for improved fluid transfer pumps.

### Summary

According to the present invention, there is provided an on-demand fluid transfer pump, comprising:
a power head removably connectable on top of a stem that is removably connectable to a fluid supply;
wherein the power head comprises an electric pump and a flow control unit configured to automatically switch the electric pump on and off;
wherein the flow control unit comprises a first magnetic sensor; and wherein the stem comprises:
a suction tube in fluid communication with the electric pump and the fluid supply;
a fluid chamber having an inlet in fluid communication with the fluid supply and an outlet in fluid communication with a fluid dispenser;
a plunger chamber in fluid communication with the fluid chamber between the inlet and the outlet; and
a magnetic plunger reciprocable within the plunger chamber in response to pressure changes in the fluid chamber between a top position adjacently beneath the first magnetic sensor and a bottom position spaced away below the first magnetic sensor;
wherein the magnetic plunger is biased to the bottom position when pressure in the fluid chamber drops to thereby deactuate the first magnetic sensor to switch on the electric pump to pressurise the fluid supply for delivery to the fluid dispenser; and
wherein the magnetic plunger is pushed to the top position when pressure in the fluid chamber rises to thereby actuate the first magnetic sensor to switch off the electric pump.

The first magnetic sensor may comprise a Hall effect sensor.

The first magnetic sensor may comprise a reed switch.

The first magnetic sensor may be fluidly isolated in a fluid-tight compartment within the power head.

The fluid supply may comprise a drum.

The stem may be removably mountable directly on the drum.

The fluid dispenser may comprise a trigger-operated dispensing gun.

The power head may further comprise a rechargeable battery to power the electric pump.

The power head may further comprise a locking mechanism having a handle, wherein the power head is lockably connected on top of the stem by pushing the handle down, and disconnected from the stem by pulling the handle up.

The flow control unit may further comprise a second magnetic sensor configured to detect that the power head is connected on top of the stem.

The flow control unit may be further configured to prevent the electric pump from being switched on if the second magnetic sensor does not detect that the power head is connected on top of the stem.

The second magnetic sensor may comprise a Hall effect sensor.

The second magnetic sensor may comprise a reed switch.

The flow control unit may be further configured to prevent the electric pump from being switched on if the handle is not pushed down to thereby lock the power head on top of the stem.

The flow control unit may comprise pressure control circuitry and detection circuitry on a printed circuit board.

The first and second magnetic sensors may be provided on the printed circuit board.

The fluid supply may comprise a supply of an industrial fluid comprising, for example, oil or aqueous urea solution.

The present invention also provides a method of transferring fluid from a fluid supply to a fluid dispenser using the on-demand fluid transfer pump described above.

### Brief Description of Drawings

Embodiments of the invention will now be described by way of example only with reference to the accompanying drawings, in which:
Figure 1 is an assembled perspective view of an on-demand fluid transfer pump according to an embodiment of the present invention;
Figure 2 is a partially exploded perspective view of the on demand fluid transfer pump;
Figures 3 to 6 are schematic section views of the on demand fluid transfer pump at different stages of operation illustrating an operating cycle of the on demand fluid transfer pump; and
Figure 7 is a functional block diagram of an embodiment of a fluid control unit of the on-demand fluid transfer pump.

### Description of Embodiments

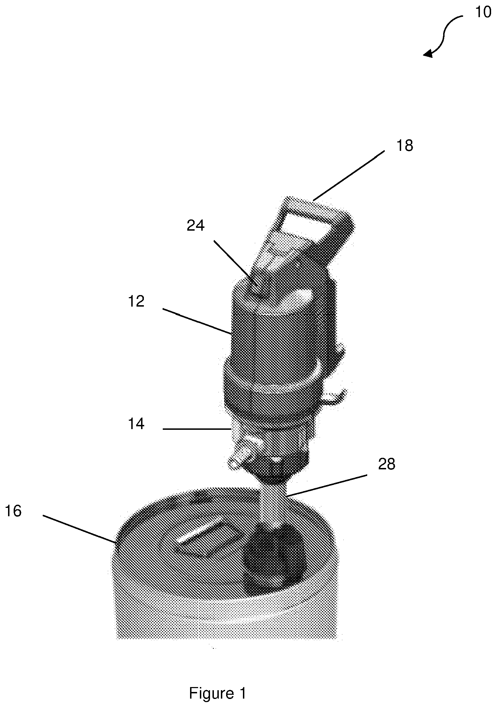

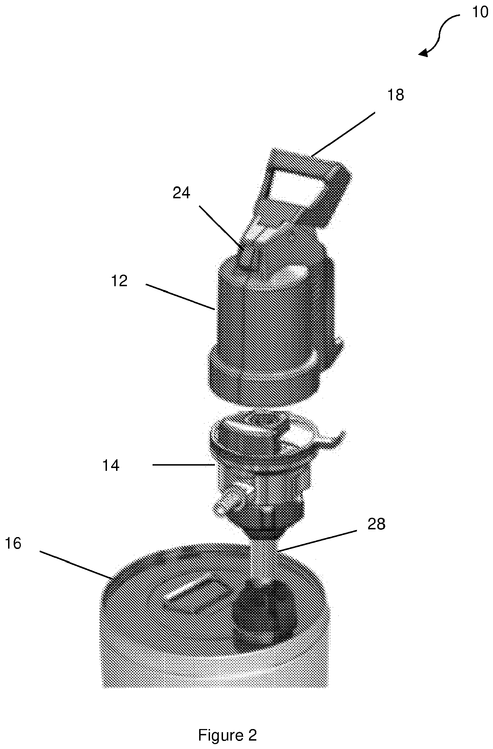

Referring to Figures 1 and 2, an embodiment of an on-demand fluid transfer pump 10 according to the present invention generally comprises a power head 12 that is removably connectable on top of a stem 14 which is removably connectable to a fluid supply 16. The fluid supply 16 may, for example comprise a 20L drum. The stem 14 may be removably mountable directly on the drum 16. The fluid supply may comprise an industrial fluid, for example, oil or aqueous urea solution.

The power head 12 may further comprise a locking mechanism (not shown) having a handle 18. The power head 12 may be lockably connected on top of the stem 14 by pushing the handle 18 down (Figure 1), and disconnected from the stem 14 by pulling the handle 18 up (Figure 2).

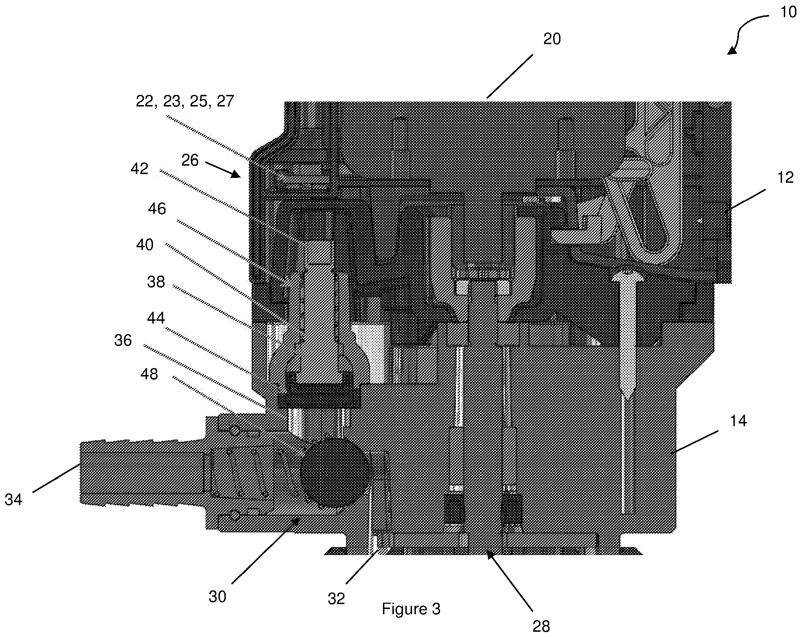

Referring to Figures 3 to 6, the power head 12 may comprise an electric pump 20 and a flow control unit 22 that is configured to automatically switch the electric pump 20 on and off. The flow control unit 22 may comprise a first magnetic sensor 23. The electric pump 20 may comprise a flexible impeller pump driven by a DC brushed motor having a direct-drive configuration (ie, no gearbox) for smooth and quiet operation. The flexible impeller may allow for reliable self-priming of the electric pump 20. The power head 12 may further comprise a rechargeable battery (not shown) to power the electric pump 20. The rechargeable battery may, for example, comprise an 18V DC lithium ion battery. The power head 12 may be actuated for automatic operation of the electric pump 20 by a rocker switch 24.

The first magnetic sensor 23 may comprise a Hall effect sensor or a reed switch. The first magnetic sensor 23 may be fluidly isolated in a fluid-tight compartment 26 within the power head 12. The first magnetic sensor 23 may be provided on a printed circuit board 27 within the fluid-tight compartment 26.

The stem 14 may comprise a suction tube 28 in fluid communication with the electric pump 18 and the fluid supply 16. The stem 14 may further comprise a fluid chamber 30 having an inlet 32 in fluid communication with the fluid supply 16 and an outlet 34 in fluid communication with a fluid dispenser (not shown). The fluid dispenser may, for example, comprise a trigger-operated dispensing gun.

The stem 14 may further comprise a plunger chamber 36 in fluid communication with the fluid chamber 30 between the inlet 32 and the outlet 34. A magnetic plunger (or piston) 38 may be reciprocable within the plunger chamber 36 in response to pressure changes in the fluid chamber 30 between a top position adjacently beneath the first magnetic sensor 23 and a bottom position spaced away below the first magnetic sensor 23. The magnetic plunger 38 may comprise a rod 40 having a permanent magnet 42 at a top end, and a diaphragm 44 at a bottom end. The magnetic plunger 38 may be biased toward the bottom position by a spring 46. An outlet check valve 48 and an inlet check valve (not shown) are provided between the fluid chamber 30 and the fluid supply 16 to maintain the fluid chamber 30 in a primed condition.

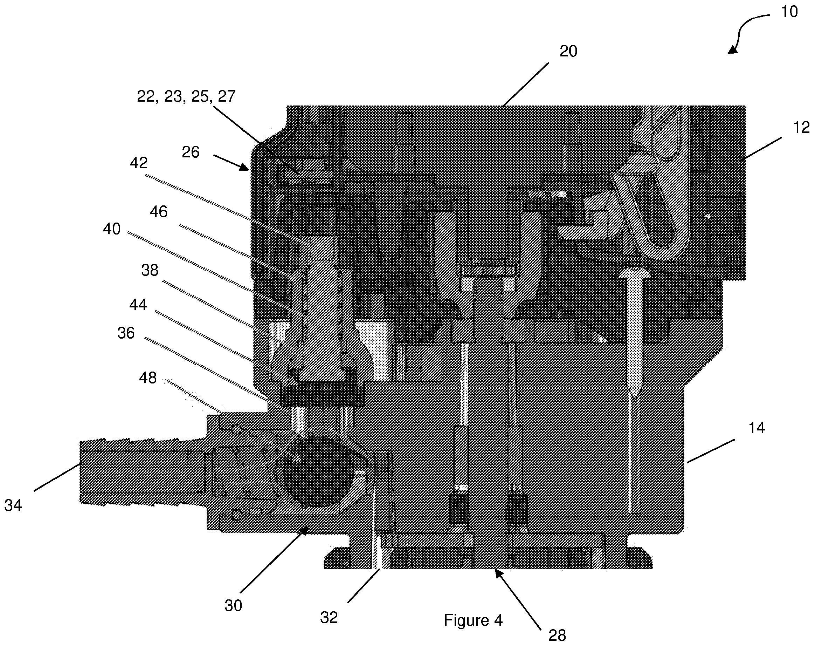

Referring to Figure 4, the magnetic plunger 38 is biased to the bottom position in the plunger chamber 36 by the spring 46 when pressure in the fluid chamber 30 drops to thereby deactuate the first magnetic sensor 23 to switch on the electric pump 20 to pressurise the fluid supply for delivery to the fluid dispenser, for example when the trigger-operated dispensing gun is open.

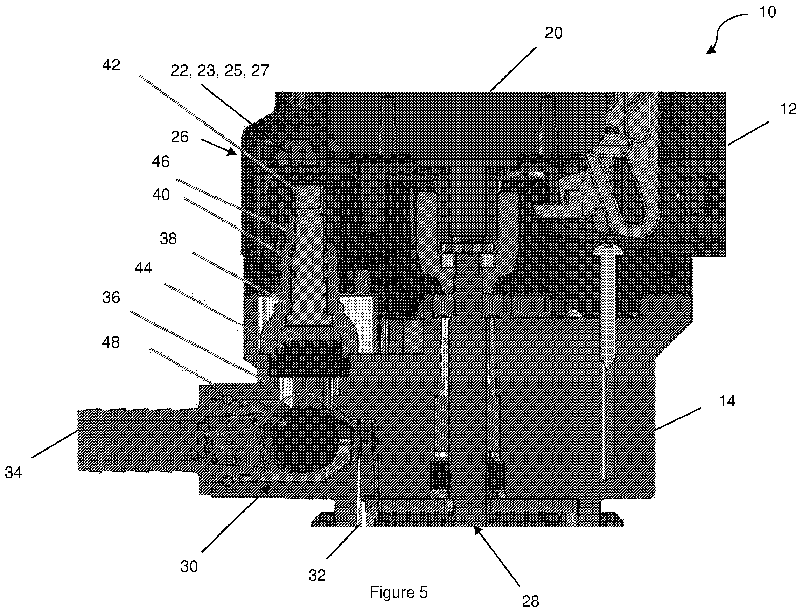

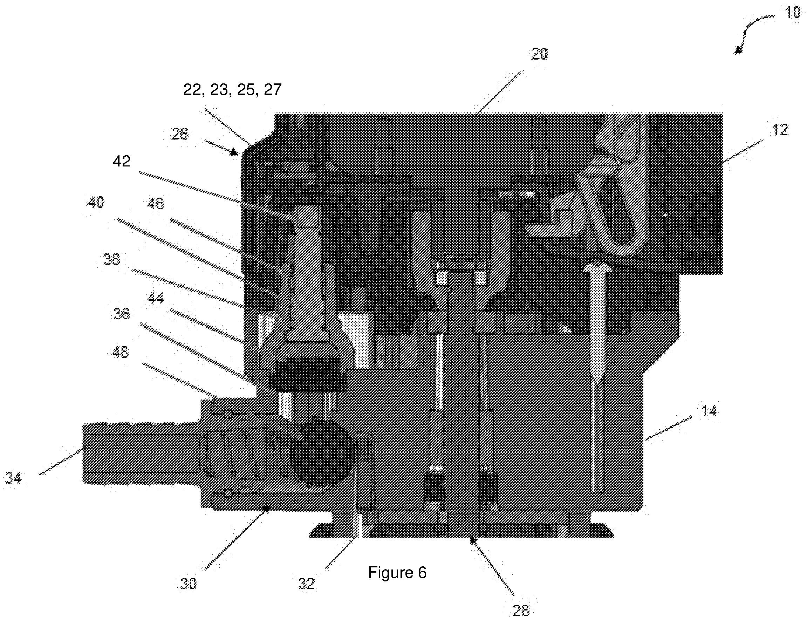

Referring to Figures 5 and 6, the magnetic plunger 38 is pushed to the top position in the plunger chamber 36 when pressure in the fluid chamber 30 rises, for example when the trigger-operated dispensing gun is closed, to thereby actuate the first magnetic sensor 23 to switch off the electric pump 20. The outlet check valve 48 closes to maintain the fluid in the fluid chamber 30 in a primed condition with the electric pump 20 switched off until the trigger-operated dispensing gun is re-opened for use.

In use, the flow control unit 22 of the on-demand fluid transfer pump 10 senses the position of the trigger of the dispensing gun through changes in pressure levels in the fluid chamber 30 and the electric pump 20 is automatically switched on and off. For example, the electric pump 20 is automatically switched on when the dispensing gun trigger is pulled, and automatically switched off when the dispensing gun trigger is released.

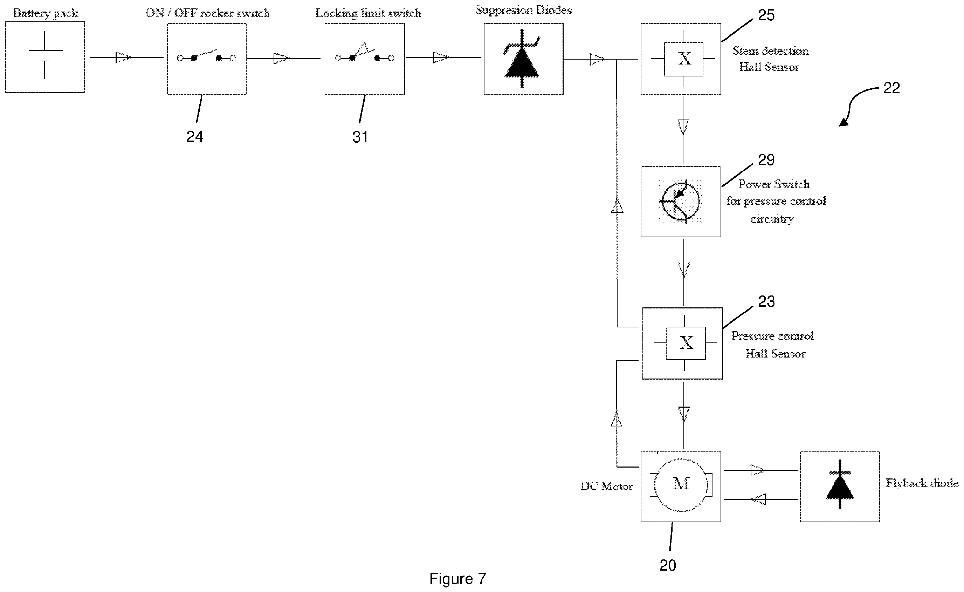

Referring to Figure 7, the flow control unit 22 may comprise a second magnetic sensor 25 configured to detect that the power head 12 is connected on top of the stem 14. A second permanent magnet (not shown) may be positioned on the stem 14 so that it comes within a detection distance of the second magnetic sensor 25 only when the power head 12 sits on top of the stem 14. The second magnetic sensor 25 may comprise a Hall effect sensor or a reed switch. The flow control unit 22 may be further configured to prevent the electric pump 20 from being switched on if the second magnetic sensor 25 does not detect that the power head 12 is connected on top of the stem 14.

The flow control unit 22 may be further configured to prevent the electric pump 20 from being switched on if the handle 18 is not pushed down to thereby lock the power head 12 on top of the stem 14. The flow control unit 22 may comprise pressure control circuitry 29 and detection circuitry 31 on the printed circuit board within the fluid-tight compartment 26. The second magnetic sensor 25 may also be provided on the printed circuit board 27.

Embodiments of the present invention provide a drum mounted, on-demand fluid transfer pump that is both generally and specifically useful for transferring industrial fluids, such as engine or gearbox oils, from bulk fluid containers, such as drums, to dispensing points, such as car engines or gearboxes, using fluid dispensers, such as trigger-operated dispensing guns. The modular design of embodiments of the invention enables one power head to be used with multiple stems. Each stem may be used on an individual oil drum to avoid oil contamination. The automatic switching of the electric pump provided by the pressure-controlled magnetic switch is easier to use than a hand-actuated pump. There is no need to manually actuate the pump which means that a user's eyes can be constantly kept on the dispensing point to avoid or minimise oil overflow or spillage. The stem mounts directly on top of the oil drum and comprises a suction tube that is inserted into the oil drum. This avoids the need for hoses resulting in a setup that is tidier and safer compared to conventional arrangements.

For the purpose of this specification, the word "comprising" means "including but not limited to," and the word "comprises" has a corresponding meaning.

## Claims

1. An on-demand fluid transfer pump, comprising:
a power head (12) removably connectable on top of a stem (14) that is removably connectable to a fluid supply (16);
wherein the power head (12) comprises an electric pump (20) and a flow control unit (22) configured to automatically switch the electric pump (20) on and off;
wherein the flow control unit (22) comprises a first magnetic sensor (23); and
wherein the stem (14) comprises:
a suction tube (28) in fluid communication with the electric pump (20) and the fluid supply (16); a fluid chamber (30) having an inlet (32) in fluid communication with the fluid supply (16) and an outlet (34) in fluid communication with a fluid dispenser;
a plunger chamber (36) in fluid communication with the fluid chamber (30) between the inlet (32) and the outlet (34); and
a magnetic plunger (38) reciprocable within the plunger chamber (36) in response to pressure changes in the fluid chamber (30) between a top position adjacently beneath the first magnetic sensor (23) and a bottom position spaced away below the first magnetic sensor (23), **characterised in that** the magnetic plunger (38) is biased to the
bottom position when pressure in the fluid chamber (30) drops to thereby deactuate the first magnetic sensor (23) to switch on the electric pump (20) to pressurise the fluid supply (16) for delivery to the fluid dispenser; and **in that** the magnetic plunger (38) is pushed to the top position when pressure in the fluid chamber (30) rises to thereby actuate the first magnetic sensor (23) to switch off the electric pump (20).

2. The on-demand fluid transfer pump of claim 1, wherein the first magnetic sensor (23) comprises a Hall effect sensor or a reed switch.

3. The on-demand fluid transfer pump of claim 1, wherein the first magnetic sensor (23) is fluidly isolated in a fluid-tight compartment (26) within the power head (12).

4. The on-demand fluid transfer pump of claim 1, wherein the fluid supply (16) comprises an oil drum.

5. The on-demand fluid transfer pump of claim 4, wherein the stem (14) is removably mountable directly on the oil drum.

6. The on-demand fluid transfer pump of claim 4, wherein the fluid dispenser comprises a trigger-operated dispensing gun.

7. The on-demand fluid transfer pump of claim 1, wherein the power head (12) further comprises a rechargeable battery to power the electric pump (20).

8. The on-demand fluid transfer pump of claim 1, wherein the power head (12) further comprises a locking mechanism having a handle (18), and wherein the power head (12) is lockably connected on top of the stem (14) by pushing the handle (18) down, and disconnected from the stem (14) by pulling the handle (18) up.

9. The on-demand fluid transfer pump of claim 1, wherein the flow control unit (22) further comprises a second magnetic sensor (25) configured to detect that the power head (12) is connected on top of the stem (14).

10. The on-demand fluid transfer pump of claim 9, wherein the flow control unit (22) is further configured to prevent the electric pump (20) from being switched on if the second magnetic sensor (25) does not detect that the power head (12) is connected on top of the stem (14).

11. The on-demand fluid transfer pump of claim 9, wherein the second magnetic sensor (25) comprises a Hall effect sensor or a reed switch.

12. The on-demand fluid transfer pump of claim 8, wherein the flow control unit (22) is further configured to prevent the electric pump (20) from being switched on if the handle (18) is not pushed down to thereby lock the power head (12) on top of the stem (14).

13. The on-demand fluid transfer pump of claim 9, wherein the flow control unit (22) comprises pressure control circuitry (29) and detection circuitry (31) on a printed circuit board (27).

14. The on-demand fluid transfer pump of claim 13, wherein the first and second magnetic sensors (23, 25) are provided on the printed circuit board (27).

15. A method of transferring fluid from a fluid supply (16) to a fluid dispenser using the on- demand fluid transfer pump (10) of any one of claims 1 to 14.

## Patentansprüche

1. On-demand-Fluidtransferpumpe, umfassend:
einen Antriebskopf (12), der abnehmbar oben auf einem Stamm (14) verbindbar ist,
der abnehmbar mit einer Fluidversorgung (16) verbindbar ist;
wobei der Antriebskopf (12) eine elektrische Pumpe (20) und eine Durchflusssteuereinheit (22) umfasst, die konfiguriert ist, die elektrische Pumpe (20) automatisch ein- und auszuschalten;
wobei die Durchflusssteuereinheit (22) einen ersten Magnetsensor (23) umfasst; und
wobei der Stamm (14) umfasst:
ein Ansaugrohr (28) in Fluidverbindung mit der elektrischen Pumpe (20) und der Fluidversorgung (16); eine Fluidkammer (30) mit einem Einlass (32) in Fluidverbindung mit der Fluidversorgung (16) und einem Auslass (34) in Fluidverbindung mit einem Fluidspender;
eine Stößelkammer (36) in Fluidverbindung mit der Fluidkammer (30) zwischen dem Einlass (32) und dem Auslass (34); und
einen Magnetstößel (38), der innerhalb der Stößelkammer (36) in Reaktion auf Druckänderungen in der Fluidkammer (30) zwischen einer oberen Position benachbart unterhalb des ersten Magnetsensors (23) und einer unteren Position beabstandet unterhalb des ersten Magnetsensors (23) hin- und her bewegbar ist,
**dadurch gekennzeichnet, dass**
der Magnetstößel (38) in die untere Position vorgespannt wird, wenn der Druck in der Fluidkammer (30) abfällt, um dadurch den ersten Magnetsensor (23) zu deaktivieren,
um die elektrische Pumpe (20) einzuschalten, um die Fluidversorgung (16) zur Abgabe an den Fluidspender unter Druck zu setzen; und
dass der Magnetstößel (38) in die obere Position gedrückt wird, wenn der Druck in der Fluidkammer (30) ansteigt, um dadurch den ersten Magnetsensor (23) zu betätigen und die elektrische Pumpe (20) abzuschalten.

2. On-demand-Fluidtransferpumpe nach Anspruch 1, wobei der erste Magnetsensor (23) einen Hall-Effekt-Sensor oder einen Reed-Schalter umfasst.

3. On-demand-Fluidtransferpumpe nach Anspruch 1, wobei der erste Magnetsensor (23) in einem fluiddichten Raum (26) innerhalb des Antriebskopfes (12) fluidisoliert ist.

4. On-demand-Fluidtransferpumpe nach Anspruch 1, wobei die Fluidversorgung (16) ein Ölfass umfasst.

5. On-demand-Fluidtransferpumpe nach Anspruch 4, wobei der Stamm (14) direkt am Ölfass abnehmbar montierbar ist.

6. On-demand-Fluidtransferpumpe nach Anspruch 4, wobei der Fluidspender eine abzugsbetätigte Spenderpistole umfasst.

7. On-demand-Fluidtransferpumpe nach Anspruch 1, wobei der Antriebskopf (12) ferner eine wiederaufladbare Batterie zur Energieversorgung der elektrischen Pumpe (20) umfasst.

8. On-demand-Fluidtransferpumpe nach Anspruch 1, wobei der Antriebskopf (12) ferner einen Verriegelungsmechanismus mit einem Griff (18) umfasst, und wobei der Antriebskopf (12) durch Herunterdrücken des Griffs (18) oben auf dem Stamm (14) verriegelbar verbunden und durch Hochziehen des Griffs (18) vom Stamm (14) getrennt wird.

9. On-demand-Fluidtransferpumpe nach Anspruch 1, wobei die Durchflusssteuereinheit (22) ferner einen zweiten Magnetsensor (25) umfasst, der konfiguriert ist, zu erkennen, dass der Antriebskopf (12) oben auf dem Stamm (14) verbunden ist.

10. On-demand-Fluidtransferpumpe nach Anspruch 9, wobei die Durchflusssteuereinheit (22) ferner konfiguriert ist, zu verhindern, dass die elektrische Pumpe (20) eingeschaltet wird, wenn der zweite Magnetsensor (25) nicht erkennt, dass der Antriebskopf (12) oben auf dem Stamm (14) verbunden ist.

11. On-demand-Fluidtransferpumpe nach Anspruch 9, wobei der zweite Magnetsensor (25) einen Hall-Effekt-Sensor oder einen Reed-Schalter umfasst.

12. On-demand-Fluidtransferpumpe nach Anspruch 8, wobei die Durchflusssteuereinheit (22) ferner konfiguriert ist, zu verhindern, dass die elektrische Pumpe (20) eingeschaltet wird, wenn der Griff (18) nicht nach unten gedrückt ist, um dadurch den Antriebskopf (12) oben auf dem Stamm (14) zu verriegeln.

13. On-demand-Fluidtransferpumpe nach Anspruch 9, wobei die Durchflusssteuereinheit (22) eine Drucksteuerschaltung (29) und eine Erkennungsschaltung (31) auf einer Leiterplatte (27) umfasst.

14. On-demand-Fluidtransferpumpe nach Anspruch 13, wobei der erste und der zweite Magnetsensor (23, 25) auf der Leiterplatte (27) vorgesehen sind.

15. Verfahren zum Transfer von Fluid von einer Fluidversorgung (16) zu einem Fluidspender unter Verwendung der On-demand-Fluidtransferpumpe (10) nach einem der Ansprüche 1 bis 14.

## Revendications

1. Pompe de transfert de fluide à la demande, comprenant :
une tête de pompe (12) pouvant être connectée de manière détachable en haut d'une tige (14) pouvant être connectée de manière détachable à une alimentation en fluide (16) ;
la tête de pompe (12) comprenant une pompe électrique (20) et une unité de contrôle du débit (22) configurée pour activer et désactiver automatiquement la pompe électrique (20) ;
l'unité de contrôle du débit (22) comprenant un premier capteur magnétique (23) ; et
la tige (14) comprenant :
un tube d'aspiration (28) en communication fluidique avec la pompe électrique (20) et l'alimentation en fluide (16) ; une chambre à fluide (30) ayant une entrée (32) en communication fluidique avec l'alimentation en fluide (16) et une sortie (34) en communication fluidique avec un distributeur de fluide ;
une chambre à piston (36) en communication fluidique avec la chambre à fluide (30) entre l'entrée (32) et la sortie (34) ; et
un piston magnétique (38) pouvant effectuer un mouvement de va-et-vient à l'intérieur de la chambre de piston (36) en réponse à des changements de pression dans la chambre de fluide (30) entre une position supérieure directement en dessous du premier capteur magnétique (23) et une position inférieure espacée au-dessous du premier capteur magnétique (23),
**caractérisé en ce que** le piston magnétique (38) est sollicité vers la position inférieure lorsque la pression dans la chambre à fluide (30) diminue pour ainsi désactiver le premier capteur magnétique (23) et mettre en marche la pompe électrique (20) pour pressuriser l'alimentation en fluide (16) en vue de l'acheminer vers le distributeur de fluide ; et
**en ce que** le piston magnétique (38) est poussé vers la position supérieure lorsque la pression dans la chambre de fluide (30) augmente en actionnant le premier capteur magnétique (23) pour arrêter la pompe électrique (20).

2. Pompe de transfert de fluide à la demande selon la revendication 1, dans laquelle le premier capteur magnétique (23) comprend un capteur à effet Hall ou un interrupteur reed.

3. Pompe de transfert de fluide à la demande selon la revendication 1, dans laquelle le premier capteur magnétique (23) est isolé de façon fluidique dans un compartiment étanche (26) à l'intérieur de la tête de pompe (12).

4. Pompe de transfert de fluide à la demande selon la revendication 1, dans laquelle l'alimentation en fluide (16) comprend un baril d'huile.

5. Pompe de transfert de fluide à la demande selon la revendication 4, dans laquelle la tige (14) peut être montée de manière détachable directement sur le baril d'huile.

6. Pompe de transfert de fluide à la demande selon la revendication 4, dans laquelle le distributeur de fluide comprend un pistolet de distribution à gâchette.

7. Pompe de transfert de fluide à la demande selon la revendication 1, dans laquelle la tête de pompe (12) comprend en outre une batterie rechargeable pour alimenter la pompe électrique (20).

8. Pompe de transfert de fluide à la demande selon la revendication 1, dans laquelle la tête de pompe (12) comprend en outre un mécanisme de verrouillage avec une poignée (18), et dans laquelle la tête de pompe (12) est reliée de façon verrouillable sur le haut de la tige (14) en poussant la poignée (18) vers le bas, et est déconnectée de la tige (14) en tirant la poignée (18) vers le haut.

9. Pompe de transfert de fluide à la demande selon la revendication 1, dans laquelle l'unité de contrôle du débit (22) comprend en outre un second capteur magnétique (25) configuré pour détecter que la tête de pompe (12) est connectée sur le haut de la tige (14).

10. Pompe de transfert de fluide à la demande selon la revendication 9, dans laquelle l'unité de contrôle du débit (22) est en outre configurée pour empêcher la pompe électrique (20) d'être mise en marche si le second capteur magnétique (25) ne détecte pas que la tête de pompe (12) est connectée sur le haut de la tige (14).

11. Pompe de transfert de fluide à la demande selon la revendication 9, dans laquelle le second capteur magnétique (25) comprend un capteur à effet Hall ou un interrupteur reed.

12. Pompe de transfert de fluide à la demande selon la revendication 8, dans laquelle l'unité de contrôle du débit (22) est en outre configurée pour empêcher la pompe électrique (20) d'être mise en marche si la poignée (18) n'est pas poussée vers le bas pour verrouiller la tête de pompe (12) sur le haut de la tige (14).

13. Pompe de transfert de fluide à la demande selon la revendication 9, dans laquelle l'unité de contrôle du débit (22) comprend un circuit de contrôle de la pression (29) et un circuit de détection (31) sur une carte de circuit imprimé (27).

14. Pompe de transfert de fluide à la demande selon la revendication 13, dans laquelle le premier et le second capteurs magnétiques (23, 25) sont prévus sur la carte de circuit imprimé (27).

15. Procédé de transfert de fluide d'une réserve de fluide (16) à un distributeur de fluide à l'aide de la pompe de transfert de fluide à la demande (10) selon l'une des revendications 1 à 14.
